Europäisches Patentamt

European Patent Office

Office européen des brevets

(11) Publication number: **0 076 242**
**A1**

## EUROPEAN PATENT APPLICATION

(21) Application number: **82850177.5**

(22) Date of filing: **06.09.82**

(51) Int. Cl.³: **B 60 N 1/00**

(30) Priority: **07.09.81 SE 8105286**

(43) Date of publication of application:
**06.04.83 Bulletin 83/14**

(84) Designated Contracting States:
**AT BE CH DE FR GB IT LI NL**

(71) Applicant: **AB Nordverk**
**Box 593**
**S-451 22 Uddevalla(SE)**

(72) Inventor: **Klippare, Sten**
**Pl. 6241 Röd**
**S-451 93 Uddevalla(SE)**

(74) Representative: **Roth, Ernst Adolf Michael et al,**
**GÖTEBORGS PATENTBYRA AB Box 5005**
**S-402 21 Göteborg(SE)**

(54) A framing to fixed chairs, benches and the like.

(57) The framing which is provided with a backrest, is especially for public vehicles. The object is to provide a framing, which can be used for both right and left hand placing, which admits a very quick exchange of backrest and which requires little space during transport and stock-keeping. This has been achieved by the fact that the framing (11) comprises a rectangular frame (12, 13, 14) for receiving at least one seat. In both the essentially parallel long sides (12) of the frame there are arranged double pairs of collar bearings (16) located just opposite each other and provided with rubber grommets (20), said collar bearings being arranged and designed for receiving horizontal supporting beams (18) from the backrest (17). The supporting beams are insertable from an optional long side of the frame and are arranged to extend across the frame and to be received in the respective collar bearing (16) in the opposite long side (12). A locking means (23) is attachable in each collar bearing (16) for axially fixing the supporting beams (19) of the backrest.

FIG.2

A framing to fixed chairs, benches and the like

The present invention refers to a framing to fixed chairs, benches and the like provided with a backrest, especially for public vehicles, said framing comprising a rectangular frame for receiving at least one seat.

Background of the invention

Framings of the kind mentioned above usually comprise a fixed tube frame, in which the seat portion and the backrest make one unit. Considering the vandalization occuring on public vehicles the construction has to be as solid and robust as possible. These demands have resulted in that framings for every occuring application have to be manufactured and stored, i.e. both left and right side framings.

The most common occuring destruction is made on the seat-cushion and the backrest and it is therefore desirable that damaged parts could be readily removed and replaced by new ones, without the necessity of having the vehicle out of traffic a longer period.

Even the strongest framing could however be demolished and for this reason both types of framings have to be kept in stock at the repair workshop, which means a very space-requiring stock-keeping.

Summary and advantages of the invention

The object of the present invention is to provide a framing of a simple but yet solid construction, which can be used both for right and left hand placing which admits a very quick exchange of the backrest and which requires little space during transport and stock-keeping. This has according to the invention been achieved by the fact that in both substantially parallel long sides there are arranged double pairs of collar bearings located just opposite each other and provided with rubber grommets, said collar bearings being arranged and designed for receiving horizontal supporting beams from the backrest, said supporting beams being insertable from an optional long side of the frame and being arranged to extend across the frame and being received in the respective collar bearing in the opposite long side of the frame, and that a locking means is attachable in each collar bearing for axially fixing the supporting beams of the backrest.

Description of the drawings

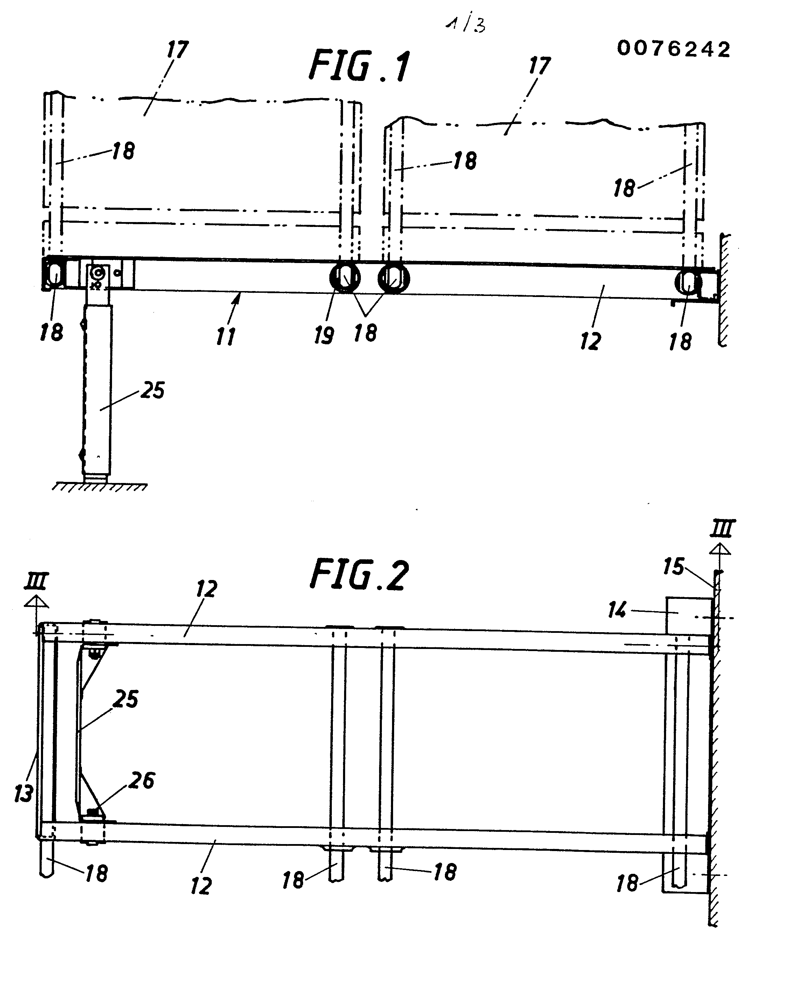

Fig. 1 is a side view of a framing according to the invention with a seat-cushion and a backrest indicated with dash-dotted lines.

Fig. 2 shows the backrest according to fig. 1 in a view from above.

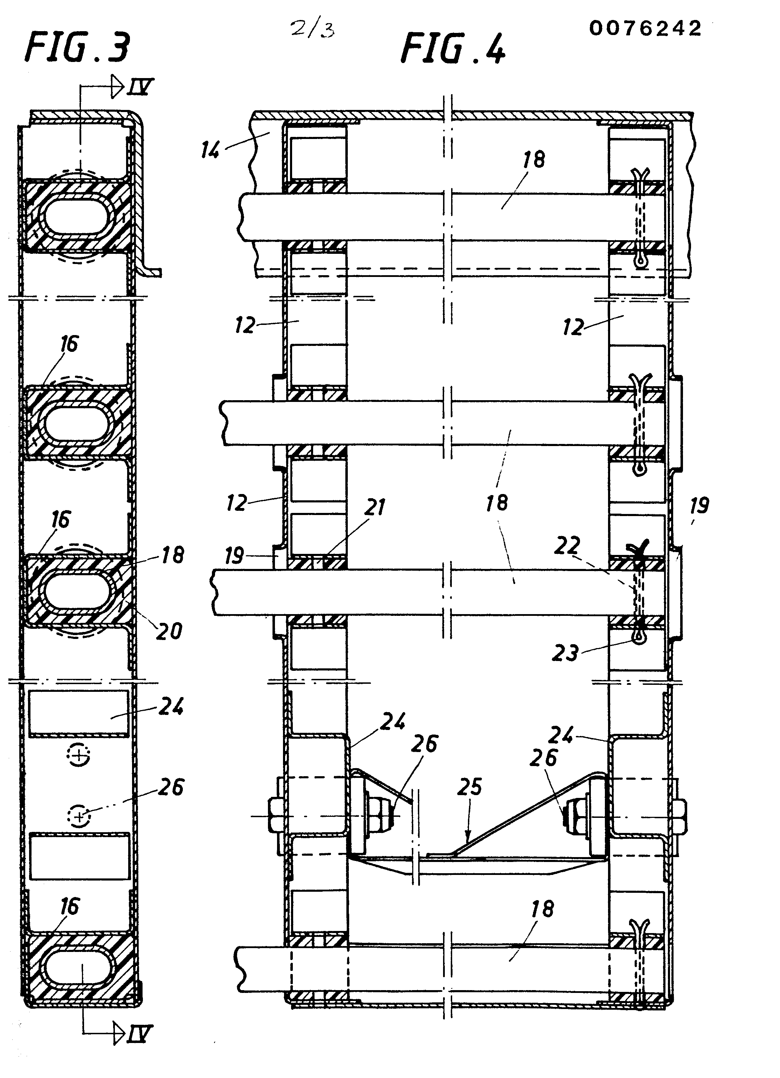

Fig. 3 shows on a larger scale a section according to the line III-III in fig. 2.

Fig. 4 is a section according to the line IV-IV in fig. 3.

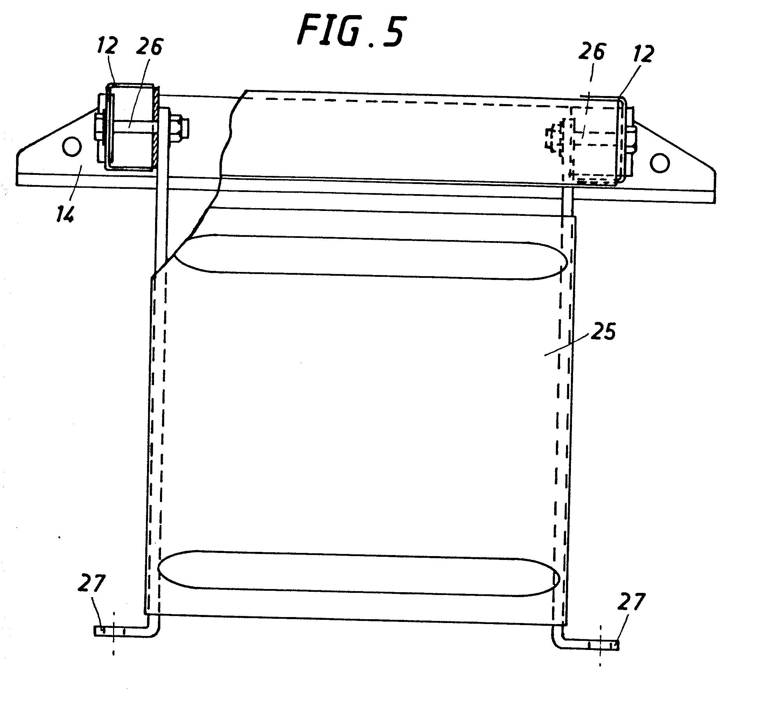

Fig. 5 shows on a still larger scale a partly broken end view of the framing according to the invention.

Description of embodiments

The framing according to the invention comprises a rectangular frame 11 consisting of two long sides 12 and two short sides 13, one of which consists of a bracket 14 for connecting the frame to a wall 15 in the vehicle. The frame 11 consists of a plate profile having a U-shaped cross-section, between the shanks of which collar bearings 16 for the supporting beams 18 of the backrest 17 are fixedly attached. The collar bearings are arranged in pairs just opposite each other in the two long sides 12 and in the rib of the plate profile openings 19 are arranged, through which the supporting beams 18 of the backrest 17 can be inserted. In each collar bearing there is arranged a rubber grommet 20, which is preferably fixed by gluing and which is provided with a recess corresponding to the cross-section of the supporting beam 18 of the backrest. In each collar bearing 16 and rubber grommet 20 there is provided a hole 21 and in the front end of the supporting beam 18 of the backrest there is also provided a bore 22 for a split pin 23, which locks the supporting beam 18 to the framing. The collar bearing construction consists of bended iron members, which by point welding or the like are fixed to the U-shaped plate profile, at which this achieves a very high strength against bending forces as well as torsional forces.

At the end of the framing remote from the bracket 14 there are fixedly arranged attachment means 24 in the plate profile of the long sides for a leg 25 arranged between the long sides. The leg is at its attachments 24 mounted about two bolts 26, which make it possible to pivot the leg from a position parallel with the long sides to a position essentially perpendicular thereto. At its lower portion the leg is provided with flanged feet 27 arranged to be fixed to the floor of the vehicle.

The design of the leg involves that there is unbroken material from its attachment to the framing to its attachment in the floor of the vehicle. Further the construction is such that it does not contain any spaces where water can be accomodated and cause ferrous corrosion.

The invention is not limited to the embodiment shown but a plurality of modifications are possible within the scope of the claims.

**0076242**

## C L A I M S

1. A framing to fixed chairs, benches and the like provided with a backrest, especially for public vehicles, said framing (11) comprising a rectangular frame (12, 13, 14) for receiving at least one seat, c h a r a c t e r i z e d   i n that in both substantially parallel long sides (12) there are arranged double pairs of collar bearings (16) located just opposite each other and provided with rubber grommets (20), said collar bearings being arranged and designed for receiving horizontal supporting beams (18) from the backrest (17), said supporting beams being insertable from an optional long side of the frame and being arranged to extend across the frame and being received in the respective collar bearing (16) in the opposite long side (12) of the frame, and that a locking means (23) is attachable in each collar bearing (16) for axially fixing the supporting beams (18) of the backrest.

2. A framing according to claim 1, c h a r a c t e r i z e d   i n that the frame (12, 13, 14) comprises a plate profile having a U-shaped cross-section and between the shanks of which said collar bearings (16) are fixed.

3. A framing according to claim 1 or 2, c h a r a c t e r i z e d   i n that one short side (14) of the frame (12, 13, 14) is designed as a bracket and that in the long sides (12) of the frame close to the opposite short side (13) there is pivotally mounted a vertically adjustable leg (25).

0076242

FIG.1

FIG.2

**FIG.3**

**FIG.4**

0076242

0076242

# FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 60 N 1/00 |
| A | GB-A-2 022 403 (AIRCRAFT FURNISHING LTD.) <br> * figures 1, 2 * | 1 | |
| | --- | | |
| A | US-A-3 979 149 (H. VOGEL) | | |
| | ----- | | |

**TECHNICAL FIELDS SEARCHED (Int. Cl. ³)**

B 60 N 1/00

The present search report has been drawn up for all claims

| Place of search <br> BERLIN | Date of completion of the search <br> 18-11-1982 | Examiner <br> BECKER W D H |
|---|---|---|